# EUROPEAN PATENT SPECIFICATION

(11) **EP 0 736 920 B1**
(45) Date of publication and mention of the grant of the patent: **23.01.2002**
(21) Application number: 96105491.3
(22) Date of filing: 04.04.1996
(51) Int. Cl.: H01M 4/58

(54) **Negative electrode carbonaceous material, method of preparing same and non-aqueous electrolyte-type secondary cell using same**
Kohlenstoffhaltiges Material für Negativelektrode, Herstellungsverfahren und dieses Material verwendende nichtwässerige Elektrolytsekundärzelle
Matériau carboné pour électrode négative, sa méthode de préparation et pile secondaire à électrolyte non-aqueux l'utilisant

(30) Priority: 07.04.1995 JP 8300195; 25.07.1995 JP 18930695
(43) Date of publication of application: 09.10.1996
(73) Proprietor: SONY CORPORATION, Tokyo (JP)
(72) Inventor: Yamahira, Takayuki, c/o Sony Energytec Inc., Koriyama, Fukushima-ken (JP); Takeuchi, Yoshiaki, c/o Sony Energytec Inc., Koriyama, Fukushima-ken (JP)
(74) Representative: Müller, Frithjof E., Dipl.-Ing.

(56) References cited:
- EP-A- 0 549 802
- EP-A- 0 643 431
- GB-A- 2 247 771
- US-A- 5 340 670

## Description

### BACKGROUND OF THE INVENTION

### Field of the Invention:

This invention relates to a method of producing a negative electrode carbonaceous material and a non-aqueous electrolyte-type secondary cell using therein the negative electrode carbonaceous material as a negative electrode active material.

### Prior art:

In association with a recent wide spread of portable equipments such as video cameras, cassette recorders or the like, there has been an increasing demand for repeatedly usable secondary cells instead of disposable primary cells.

Most of conventional secondary cells are of a nickel-cadmium type in which an alkali electrolyte is used. However, such nickel-cadmium-type cells have as low a discharge voltage as about 1.2 V so that it is difficult to enhance an energy density of the cell. In addition, the nickel-cadmium type cells have such a problem that its self-discharge rate is as high as 20 % per one month.

To eliminate the aforementioned problem, attempts have been made to use a non-aqueous solvent as an electrolyte and a light metal such as lithium as a negative electrode so as to provide a non-aqueous electrolyte-type secondary cell having as high a voltage as 3 V or higher, a high energy density and a low discharge rate.

However, the use of such a secondary cell poses a serious problem that lithium or the like metal used as the negative electrode is grown into a dendrite shape so that it comes into contact with a positive electrode when a charge/discharge cycle is repeated, whereby a short-circuit occurs within the cell. This results in short life time of the cell and therefore difficulty in putting it into practice.

In consequence, further attempts have been made to provide a non-aqueous electrolyte-type secondary cell in which an alloy composed of lithium and other metal is used as the negative electrode. However, in this case, the alloy has been broken into fine particles when subjected to repeated charge/discharge cycles, which also results in short life time and therefore difficulty on putting it into practice.

Under these circumstances, there has been proposed a non-aqueous electrolyte-type secondary cell of a type in which a carbonaceous material such as cokes is used as a negative electrode active material. Such a non-aqueous electrolyte-type secondary cell does not exhibit the aforementioned problems observed with respect to the negative electrode and have a long life time even when subjected to repeated charge/discharge cycles. Moreover, when the negative electrode active material is used in combination with the positive electrode active material such as LiₓMO₂ (where M is at least one transition metal and X is a number not less than 0.05 but not greater than 1.10) as previously proposed by the same applicants of the present patent application, there can be obtained a non-aqueous electrolyte-type secondary cell having an improved life time of the cell and an intended high energy density.

However, such a non-aqueous electrolyte-type secondary cell using the carbonaceous material as the negative electrode active material still has an insufficient energy density as compared with those in which metal lithium or the like is used as the negative electrode active material though the former is superior in cycle life or safety to the latter. One of measures to eliminate these problems includes a method in which a packing density thereof is improved. However, such a method provides only a limited level of the energy density.

Prior art document US 5 340 670 discloses a sintered carbonaceous material of a negative electrode having a density between 1.35 and 1.80 g/cm³. The interplanar distance d₀₀₂ of such carbonaceous material is 0.34 nm or less.

Further, document GB 22 47 771 describes a carbonaceous material having a density of 1.8 g/cm³ and a distance d₀₀₂ of 3.45 Angströms.

It is an object of the present invention to provide a method of producing the negative electrode carbonaceous material suitable as a negative electrode active material for a non-aqueous electrolyte-type secondary cell having a high capacity.

It is a further object of the present invention to provide a non-aqueous electrolyte-type secondary cell which is superior in cycle life and safety and exhibits a high energy density.

To solve this object the present invention provides a method of producing a negative electrode carbonaceous material as defined in claim 1 and a non-aqueous electrolyte-type secondary cell as defined in claim 4.

A method of producing a negative electrode carbonaceous material, in which a mesophase carbon is used as a carbon precursor, includes the steps of subjecting the mesophase carbon to an oxidation treatment, and thermally treating the mesophase carbon at a temperature higher than that of the oxidation treatment in an inert gas atmosphere or in an evacuated condition, whereby a carbonaceous material having a true specific gravity of 1.50 to 1.80 g/ml is obtained.

A non-aqueous electrolyte-type secondary cell includes a negative electrode active material in the form of a sintered carbon body produced by sintering a mesophase carbon as a carbon precursor, the sintered carbon body having a true specific gravity of 1.50 to 1.80 g/ml.

As described above, a particular carbonaceous material is used as a precursor and subjected to an oxidation treatment as a pre-treatment. The treated carbonaceous material is then thermally treated in an inert gas atmosphere or in an evacuated condition to obtain a sintered carbon body so that a negative electrode carbonaceous material having an extremely high capacity can be obtained.

That is, in accordance with the present invention, a mesophase carbon as a carbon precursor is first subjected to an oxidation treatment and then thermally treated in an inert gas atmosphere or in an evacuated condition at a temperature higher than that in the oxidation treatment whereby a carbonaceous material having a true specific gravity of 1.50 to 1.80 g/ml and further a spacing of (002) lattice planes of 3.37 to 3.70 Å and suitable as a negative electrode active material can be obtained.

The mesophase carbon described hereinbefore may include a simple substance composed of mesophase pitch solely, a completely carbonized mesophase pitch, a partially carbonized mesophase pitch or a mesophase pitch-containing carbon such as a mixture of mesophase pitch and carbon.

In order to obtain a final negative electrode carbonaceous material in the form of a sintered carbon body capable of being immediately applied to a negative electrode of cells, it is desirable that the mesophase carbon as a carbon precursor has a volume expansion coefficient of 20 % or lower. In the event that the sintered carbon body is finely pulverized, the volume expansion coefficient of the mesophase carbon is not restricted to a particular range. In this case, the mesophase carbon having a larger volume expansion coefficient can be used to obtain the negative electrode carbonaceous material.

In the non-aqueous electrolyte-type secondary cell using such a negative electrode active material, it is further preferred that a composite oxide represented by LiₓMO₂ where M represents at least one transition metal and X is a number not less than 0.05 but not greater than 1.10, is used as a positive electrode active material.

These and other objects, features and advantages of the present invention will become more apparently from the following detailed description when read in conjunction with the accompanying drawings and the appended claims.

### BRIEF DESCRIPTION OF THE DRAWINGS

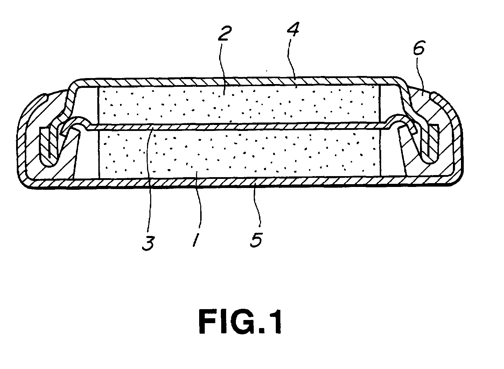

Fig. 1 is a sectional view schematically showing a nonaqueous electrolyte-type secondary cell according to the present invention.

### DETAILED DESCRIPTION OF THE INVENTION

The negative electrode carbonaceous material may be produced by using a mesophase carbon as a carbon precursor. The mesophase carbon is subjected to an oxidation treatment and then to a heat treatment in which the carbon is thermally treated at a temperature higher than the preceding oxidation temperature in an inert gas-containing atmosphere or in a evacuated condition, so that a carbonaceous material having a true specific gravity of 1.50 to 1.80 g/ml can be obtained.

The mesophase carbon used as the carbon precursor may be in the form of a simple substance composed of mesophase pitch solely, a completely carbonized mesophase pitch, a partially carbonized mesophase pitch, a mesophase pitch-containing carbon, e.g., a mixture of a mesophase pitch and carbon.

The mesophase carbon may be produced by calcining a raw material at a particular temperature and in a particular atmosphere to promote a growth of the mesophase. Examples of suitable raw materials for the mesophase carbon may include a petroleum pitch, a binder pitch, or the like. Further, low-molecular weight organic compounds such as furan, anthracene, acenaphthylene or the like are suitably used as the raw materials for the mesophase carbon.

In the production of the negative electrode carbonaceous material, the aforementioned mesophase carbon is first subjected to an oxidation treatment and then to a heat treatment in which the mesophase carbon is heated in an atmosphere containing an inert gas such as a nitrogen gas or in an evacuated condition.

The oxidation treatment may be performed in an oxidation atmosphere such as in air, or in the presence of an inorganic or organic acid, ozone, or an oxidizing agent such as potassium permanganate, aluminum chloride or the like.

Further, the oxidation and heat treatments can be performed under optional temperature conditions. However, it is necessary that a temperature used in the thermal (heat) treatment which is carried out in an inert gas-containing atmosphere or in an evacuated condition, is higher than that used in the preceding oxidation treatment. Practically, the thermal treatment may be carried out at a temperature of 800° C or higher while the oxidation treatment may be carried out at a temperature lower by 100° C or more than that in the thermal treatment.

The negative electrode carbonaceous material subjected to such an oxidation treatment exhibits an extremely high capacity. It is suggested that this is because the oxidation treatment weakens a carbon-carbon linkage of the carbonaceous material so that a true specific gravity thereof is reduced whereby number of sites in which lithium can be trapped or doped, is increased.

Incidentally, it is necessary that the thus-prepared negative electrode carbonaceous material has a true specific gravity of 1.50 to 1.80 g/ml, preferably 1.55 to 1.79 g/ml. Such a true specific gravity of the carbonaceous material can be attained by controlling a spacing of (002) lattice planes to the range of 3.37 Å (graphite) to 3.70 Å.

The negative electrode carbonaceous material can be produced in the form of a sintered body. It is most preferred that such a sintered body is directly used as the negative electrode as it is. However, the carbonaceous material may be pulverized and then mixed with a binder to prepare a raw mixture for electrodes. The electrode raw mixture may be layered, for example, over a band-like current collector to form a negative electrode layer which is arranged alternately with a positive electrode layer and a separator. The laminated body is then rolled up to form a roll-shaped electrode body.

On the other hand, the positive electrode can be prepared from an active material containing LiₓMO₂ where M is at least one transition metal, preferably at least one element selected from the group consisting of Co, Ni and Fe and X is a number not less than 0.05 but not greater than 1.10. Such an active material may include composite oxides such as LiCoO₂, LiNiO₂ or LiNi_{y}Co_{(1-y})O₂ where X is a number not less than 0.05 but not greater than 1.10, and y is a number greater than 0 but less than 1 The positive electrode may be also prepared from LiMn₂O₄.

The aforementioned composite oxides can be produced, for example, by mixing carbonates of lithium, cobalt, nickel and the like at an adequate ratio according to a composition of the aimed positive electrode and then sintering the mixture in an oxygen-containing atmosphere at a temperature ranging from 600° C to 1,000° C. Meanwhile, the starting material is not restricted to the carbonates, but hydroxides and oxides of these metals can be also used as the starting material for the positive electrode.

Any known electrolyte solution can be used in the present invention as far as they are prepared by dissolving an electrolyte in an organic solvent. Examples of suitable organic solvents may include esters such as propylene carbonate, ethylene carbonate, γ-butyrolactone or the like, ethers such as diethyl ether, tetrahydrofuran, substituted tetrahydrofuran, di-oxorane, pyrane or its derivatives, dimethoxy-ethane, diethoxy-ethane or the like, 3-substituted-2-oxazolidinones such as 3-methyl-2-oxazolidinone or the like, sulforane, methyl sulforane, propiononitrile, or the like. These organic solvents can be used singly or in the form of a mixture of two or more different solvents. Moreover, examples of suitable electrolytes may include lithium perchlorate, lithium borofluoride, lithium phosphofluoride, lithium chloroaluminate, lithium halide, lithium trifluoromethane-sulfonate or the like.

### Examples:

The present invention is described below by way of examples and comparative examples, but these examples are not intended to limit the scope of the present invention.

### Comparative Example 1A:

First, a pellet-like positive electrode was prepared in the following manner.

0. 5 mole of lithium carbonate and 1 mole of cobalt carbonate were mixed with each other. The mixture was then calcined at 900° C for 5 hours in air to form LiCoO₂. The thus-prepared LiCoO₂ was pulverized in a ball mill so that a powder of LiCoO₂ having an average particle size of 10 µm was obtained. 91 % by weight of LiCoO₂, 6 % by weight of conductive graphite and 3 % by weight of polyvinylidene-fluoride as a binder were blended with each other. Further, N-methyl pyrrolidone as a dispersing agent was added to the mixture to obtain a paste. The paste was then dried and shaped under a pressure of 5 tons into a pellet-like positive electrode having a diameter of 15.5 mm. The thus-obtained pellet-like positive electrode had a volume density d of 3.5 g/ml.

Next, a pellet-like negative electrode was prepared in the following manner.

Pitch cokes as a raw carbonaceous material were pulverized in an oscillating mill by using steel balls each having a diameter of 12.7 mm for 15 minutes. Incidentally, the pitch cokes had a true specific density of 2.03 g/cm³. In addition, the spacing of (002) lattice planes of the pitch cokes was 3.46 Å when measured by X-ray diffraction, and the crystal thickness Lc thereof along C-axis was 40 Å. Further, the pulverized pitch cokes had an average particle size of 33 µm. 90 % by weight of the pulverized pitch cokes and 10 % by weight of polyvinylidene fluoride as a binder were blended with each other. N-methyl pyrrolidone as a dispersing agent was added to the mixture to obtain a paste. The paste was then dried and shaped into a pellet-like negative electrode having a diameter of 16.0 mm. In this comparative example, LiPF₆ was dissolved, in an amount of 1 mole/liter, in a mixture solution containing ethylene carbonate and diethylene carbonate to prepare an electrolyte solution.

As shown in Fig. 1, the pellet-like negative electrode 2 and the pellet-like positive electrode 1 were placed in a cell housing constituted by a negative electrode cap 4, a positive electrode casing 5 and gasket 6. At this time, the pellet-like positive electrode 1, the pellet-like negative electrode 2 and a thin separator film 3 made of polypropylene were laminated in this order in the cell housing. The cell housing was then filled with the electrolyte solution and caulked to form a sealed casing of a lithium ion-type cell having a diameter of 20 mm and a thickness of 2.5 mm. Thus, the secondary cell of Comparative Example 1A was obtained.

### Comparative Example 1B :

A low-expansive mesophase carbon containing 88.5 % of a fixed carbon and having a total expansion coefficient of 0 % (measured by a dilatometer used in a thermal expansion test for coal) was shaped under a pressure of 3 tons into a compressed body having a diameter of 16.5 mm. The compressed body was then calcined in an oxidation atmosphere (in air in this example) at 300° C for one hour. Successively, the oxidation atmosphere was replaced with an inert gas (nitrogen) atmosphere in which the calcined body was sintered at 1,000° C for 3 hours so that a sintered carbon body having a diameter of 16.0 mm was obtained. The sintered carbon body had a true specific gravity of 1.80 g/cm³. The Spacing d of (002) lattice planes of the sintered body was 3.66 Å when measured by X-ray diffraction.

Next, the subsequent procedure was carried out in the same manner as described in Comparative Example 1A above except that the aforementioned sintered body was used as a negative electrode instead of the pellet-like negative electrode of Comparative Example 1A, so that a non-aqueous electrolyte secondary cell of Comparative Example 1B was obtained.

### Example 2:

A low-expansive mesophase carbon containing 88.5 % of a fixed carbon and having a total expansion coefficient of 0 % (corresponding to a volume expansion coefficient and measured by a dilatometer used in a thermal expansion test for coal) was shaped under a pressure of 3 tons into a compressed body having a diameter of 16.5 mm. The compressed body was then calcined in an oxidation atmosphere (in air in this example) at 300° C for one hour. Successively, the oxidation atmosphere was replaced with an inert gas (nitrogen) atmosphere in which the calcined body was sintered at 950° C for 3 hours so that a sintered carbon body having a diameter of 16.0 mm was obtained. The sintered carbon body had a true specific gravity of 1.79 g/cm³. The spacing d of (002) lattice planes of the sintered body was 3.67 A when measured by X-ray diffraction.

Next, the subsequent procedure was carried out in the same manner as described in Comparative Example 1 above except that the aforementioned sintered body was used as a negative electrode instead of the pellet-like negative electrode of Comparative Example 1A, so that a non-aqueous electrolyte secondary cell of Example 2 was obtained.

### Example 3:

A low-expansive mesophase carbon containing 88.5 % of a fixed carbon and having a total expansion coefficient of 0 % (measured by a dilatometer used in a thermal expansion test for coal) was shaped under a pressure of 3 tons into a compressed body having a diameter of 16.5 mm. The compressed body was then calcined in an oxidation atmosphere (in air in this example) at 300° C for one hour. Successively, the oxidation atmosphere was replaced with an inert gas (nitrogen) atmosphere in which the calcined body was sintered at 900° C for 3 hours so that a sintered carbon body having a diameter of 16.0 mm was obtained. The sintered carbon body had a true specific gravity of 1.70 g/cm³. The spacing d of (002) lattice planes of the sintered body-was 3.67 Å when measured by X-ray diffraction.

Next, the subsequent procedure was carried out in the same manner as described in Comparative Example 1 above except that the aforementioned sintered body was used as a negative electrode instead of the pellet-like negative electrode of Comparative Example 1A, so that a non-aqueous electrolyte secondary cell of Example 3 was obtained.

### Example 4:

A low-expansive mesophase carbon containing 88.5 % of a fixed carbon and having a total expansion coefficient of 0 % (measured by a dilatometer used in a thermal expansion test for coal) was shaped under a pressure of 3 tons into a compressed body having a diameter of 16.5 mm. The compressed body was then calcined in an oxidation atmosphere (in air in this example) at 300° C for one hour. Successively, the oxidation atmosphere was replaced with an inert gas (nitrogen) atmosphere in which the calcined body was sintered at 800° C for 3 hours so that a sintered carbon body having a diameter of 16.0 mm was obtained. The sintered carbon body had a true specific gravity of 1.65 g/cm³. The spacing of (002) lattice planes of the sintered body was 3.67 Å when measured by X-ray diffraction.

Next, the subsequent procedure was carried out in the same manner as described in Comparative Example 1 above except that the aforementioned sintered body was used as a negative electrode instead of the pellet-like negative electrode of Comparative Example 1A, so that a non-aqueous electrolyte secondary cell of Example 4 was obtained.

### COMPARATIVE EXAMPLE 5:

A low-expansive mesophase carbon containing 88.5 % of a fixed carbon and having a total expansion coefficient of 0 % (measured by a dilatometer used in a thermal expansion test for coal) was shaped under a pressure of 3 tons into a compressed body having a diameter of 16.5 mm. The compressed body was then calcined in an oxidation atmosphere (in air in this example) at 300° C for one hour. Successively, the oxidation atmosphere was replaced with an inert gas (nitrogen) atmosphere in which the calcined body was sintered at 700° C for 3 hours so that a sintered carbon body having a diameter of 16.0 mm was obtained. The sintered carbon body had a true specific gravity of 1.55 g/cm³. The spacing d of (002) lattice planes of the sintered body was 3.67 Å when measured by X-ray diffraction.

Next, the subsequent procedure was carried out in the same manner as described in Comparative Example 1 above except that the aforementioned sintered body was used as a negative electrode instead of the pellet-like negative electrode of Comparative Example 1A, so that a non-aqueous electrolyte secondary cell of COMPARATIVE Example 5 was obtained.

### COMPARATIVE EXAMPLE 6 :

A low-expansive mesophase carbon containing 88.5 % of a fixed carbon and having a total expansion coefficient of 0 % (measured by a dilatometer used in a thermal expansion test for coal) was shaped under a pressure of 3 tons into a compressed body having a diameter of 16.5 mm. The compressed body was then calcined in an oxidation atmosphere (in air in this example) at 300° C for one hour. Successively, the oxidation atmosphere was replaced with an inert gas (nitrogen) atmosphere in which the calcined body was sintered at 600° C for 3 hours so that a sintered carbon body having a diameter of 16.0 mm was obtained. The sintered carbon body had a true specific gravity of 1.50 g/cm³. The spacing d of (002) lattice planes of the sintered body was 3.70 Å when measured by X-ray diffraction.

Next, the subsequent procedure was carried out in the same manner as described in Comparative Example 1 above except that the aforementioned sintered body was used as a negative electrode instead of the pellet-like negative electrode of Comparative Example 1A, so that a non-aqueous electrolyte secondary cell of Comparative Example 6 was obtained,

### Comparative Example 2:

A low-expansive mesophase carbon containing 88.5 % of a fixed carbon and having a total expansion coefficient of 0 % (measured by a dilatometer used in a thermal expansion test for coal) was shaped under a pressure of 3 tons into a compressed body having a diameter of 16.5 mm. The compressed body was then calcined in an oxidation atmosphere (in air in this example) at 300° C for one hour. Successively, the oxidation atmosphere was replaced with an inert gas (nitrogen) atmosphere in which the calcined body was sintered at 500° C for 3 hours so that a sintered carbon body having a diameter of 16.0 mm was obtained. The sintered carbon body had a true specific gravity of 1.45 g/cm³. The spacing of (002) lattice planes of the sintered body was 3.72 Å when measured by X-ray diffraction.

Next, the subsequent procedure was carried out in the same manner as described in Comparative Example 1A above except that the aforementioned sintered body was used as a negative electrode instead of the pellet-like negative electrode of Comparative Example 1A, so that a non-aqueous electrolyte secondary cell of Comparative Example 2 was obtained.

### Comparative example 7 :

A low-expansive mesophase carbon containing 88.5 % of a fixed carbon and having a total expansion coefficient of 0 % (measured by a dilatometer used in a thermal expansion test for coal) was shaped under a pressure of 3 tons into a compressed body having a diameter of 16.5 mm. The compressed body was then calcined in an oxidation atmosphere (in air in this example) at 200° C for one hour. Successively, the oxidation atmosphere was replaced with an inert gas (nitrogen) atmosphere in which the calcined body was sintered at 1,000° C for 3 hours so that a sintered carbon body having a diameter of 16.0 mm was obtained. The sintered carbon body had a true specific gravity of 1.79 g/cm³. The spacing of (002) lattice planes of the sintered body was 3.66 Å when measured by X-ray diffraction.

Next, the subsequent procedure was carried out in the same manner as described in Comparative Example 1A above except that the aforementioned sintered body was used as a negative electrode instead of the pellet-like negative electrode of Comparative Example 1A, so that a non-aqueous electrolyte secondary cell of Comparative Example 7 was obtained.

### Comparative example 8.

A low-expansive mesophase carbon containing 88.5 % of a fixed carbon and having a total expansion coefficient of 0 % (measured by a dilatometer used in a thermal expansion test for coal) was shaped under a pressure of 3 tons into a compressed body having a diameter of 16.5 mm. The compressed body was then calcined in an oxidation atmosphere (in air in this example) at 200° C for one hour. Successively, the oxidation atmosphere was replaced with an inert gas (nitrogen) atmosphere in which the calcined body was sintered at 1,000° C for 3 hours so that a sintered carbon body having a diameter of 16.0 mm was obtained. The sintered carbon body had a true specific gravity of 1.79 g/cm³. The spacing d of (002) lattice planes of the sintered body was 3.66 Å when measured by X-ray diffraction.

Next, the sintered body was pulverized and the subsequent procedure was carried out in the same manner as described in Comparative Example 1A above except that the aforementioned pulverized sintered body was used as a negative electrode instead of the pellet-like negative electrode of Comparative Example 1A, so that a non-aqueous electrolyte secondary cell of Comparative Example 8 was obtained.

### Comparative Example A :

A low-expansive mesophase carbon containing 88.5 % of a fixed carbon and having a total expansion coefficient of 0 % (measured by a dilatometer used in a thermal expansion test for coal) was shaped under a pressure of 3 tons into a compressed body having a diameter of 16.5 mm. The compressed body was then calcined in an oxidation atmosphere (in air in this example) at 400° C for one-half hour. Successively, the oxidation atmosphere was replaced with an inert gas (nitrogen) atmosphere in which the calcined body was sintered at 1,000° C for 3 hours so that a sintered carbon body having a diameter of 16.0 mm was obtained. The sintered carbon body had a true specific gravity of 1.75 g/cm³. The spacing of (002) lattice planes of the sintered body was 3.66 Å when measured by X-ray diffraction.

Next, the subsequent procedure was carried out in the same manner as described in Comparative Example 1A above except that the aforementioned sintered body was used as a negative electrode instead of the pellet-like negative electrode of Comparative Example 1A, so that a non-aqueous electrolyte secondary cell of Comparative Example A was obtained.

### Comparative example B:

A low-expansive mesophase carbon containing 88.5 % of a fixed carbon and having a total expansion coefficient of 0 % (measured by a dilatometer used in a thermal expansion test for coal) was shaped under a pressure of 3 tons into a compressed body having a diameter of 16.5 mm. The compressed body was then calcined in an oxidation atmosphere (in air in this example) at 500° C for one-half hour. Successively, the oxidation atmosphere was replaced with an inert gas (nitrogen) atmosphere in which the calcined body was sintered at 1,000° C for 3 hours so that a sintered carbon body having a diameter of 16.0 mm was obtained. The sintered carbon body had a true specific gravity of 1.72 g/cm³. The spacing of (002) lattice planes of the sintered body was 3.66 Å when measured by X-ray diffraction.

Next, the subsequent procedure was carried out in the same manner as described in Comparative Example 1A above except that the aforementioned sintered body was used as a negative electrode instead of the pellet-like negative electrode of Comparative Example 1A, so that a non-aqueous electrolyte secondary cell of Comparative Example B was obtained.

### Comparative Example C:

A low-expansive mesophase carbon containing 88.5 % of a fixed carbon and having a total expansion coefficient of 0 % (measured by a dilatometer used in a thermal expansion test for coal) was shaped under a pressure of 3 tons into a compressed body having a diameter of 16.5 mm. The compressed body was then calcined in an oxidation atmosphere (in air in this example) at 600° C for one-half hour. Successively, the oxidation atmosphere was replaced with an inert gas (nitrogen) atmosphere in which the calcined body was sintered at 1,000° C for 3 hours so that a sintered carbon body having a diameter of 16.0 mm was obtained. The sintered carbon body had a true specific gravity of 1.70 g/cm³. The spacing d of (002) lattice planes of the sintered body was 3.60 Å when measured by X-ray diffraction.

Next, the subsequent procedure was carried out in the same manner as described in Comparative Example 1A above except that the aforementioned sintered body was used as a negative electrode instead of the pellet-like negative electrode of Comparative Example 1A, so that a non-aqueous electrolyte secondary cell of Comparative Example C was obtained.

### Comparative Example D:

A low-expansive mesophase carbon containing 88.5 % of a fixed carbon and having a total expansion coefficient of 0 % (measured by a dilatometer used in a thermal expansion test for coal) was shaped under a pressure of 3 tons into a compressed body having a diameter of 16.5 mm. The compressed body was then calcined in an oxidation atmosphere (in air in this example) at 700° C for 0.1 hour. Successively, the oxidation atmosphere was replaced with an inert gas (nitrogen) atmosphere in which the calcined body was sintered at 1,000° C for 3 hours so that a sintered carbon body having a diameter of 16.0 mm was obtained. The sintered carbon body had a true specific gravity of 1.75 g/cm³. The spacing of (002) lattice planes of the sintered body was 3.50 Å when measured by X-ray diffraction.

Next, the subsequent procedure was carried out in the same manner as described in Comparative Example 1A above except that the aforementioned sintered body was used as a negative electrode instead of the pellet-like negative electrode of Comparative Example 1A, so that a non-aqueous electrolyte secondary cell of Comparative Example D was obtained.

### Comparative Example E:

A powdery low-expansive mesophase carbon containing 88.5 % of a fixed carbon and having a total expansion coefficient of 0 % (measured by a dilatometer used in a thermal expansion test for coal) was calcined in an oxidation atmosphere (in air in this example) at 300° C for one hour. The calcined powdery carbon was compressed under a pressure of 3 tons to obtain a shaped body having a diameter of 16.5 mm. Successively, the oxidation atmosphere was replaced with an inert gas (nitrogen) atmosphere in which the shaped body was sintered at 1,000° C for 3 hours so that a sintered carbon body having a diameter of 16.0 mm was obtained. The sintered carbon body had a true specific gravity of 1.75 g/cm³. The spacing d of (002) lattice planes of the sintered body was 3.66 Å when measured by X-ray diffraction.

Next, the subsequent procedure was carried out in the same manner as described in Comparative Example 1A above except that the aforementioned sintered body was used as a negative electrode instead of the pellet-like negative electrode of Comparative Example 1A, so that a non-aqueous electrolyte secondary cell of Comparative Example E was obtained.

### Comparative Example 3:

A low-expansive mesophase carbon containing 88.5 % of a fixed carbon and having a total expansion coefficient of 0 % (measured by a dilatometer used in a thermal expansion test for coal) was shaped under a pressure of 3 tons into a compressed body having a diameter of 16.5 mm. The compressed body was then calcined in an oxidation atmosphere (in air in this example) at 800° C for 0.1 hour. Successively, the oxidation atmosphere was replaced with an inert gas (nitrogen) atmosphere in which the calcined body was sintered at 700° C for 3 hours so that a sintered carbon body having a diameter of 16.0 mm was obtained. The sintered carbon body had a true specific gravity of 1.55 g/cm³. The spacing d of (002) lattice planes of the sintered body was 3.67 Å when measured by X-ray diffraction.

Next, the subsequent procedure was carried out in the same manner as described in Comparative Example 1 above except that the aforementioned sintered body was used as a negative electrode instead of the pellet-like negative electrode of Comparative Example 1A, so that a non-aqueous electrolyte secondary cell of Comparative Example 3 was obtained.

### Comparative Example 4:

The procedure of Comparative Example 1A was repeated in the same manner as described above except that a negative electrode made of a synthetic graphite was used instead the pellet-like negative electrode, so that a non-aqueous electrolyte secondary cell of Comparative Example 4 was obtained. The synthetic graphite had a true specific gravity of 2.26 g/cm3. The spacing of (002) lattice planes of the synthetic graphite was 3.36 Å when measured by X-ray diffraction.

Meanwhile, in the aforementioned Examples and Comparative Examples, the true specific gravity and the spacing of (002) lattice planes were measured in the following manner.

### True Specific Gravity:

The sintered carbon body or its powder produced above were finely pulverized in an agate mortar. 5 grams of the finely pulverized carbon was filled into a measuring glass container. By using butanol as a solvent, the true specific gravity of the finely pulverized carbon was measured.

### Powder X-Ray Diffraction Measurement:

The sintered carbon body or its powder produced above were finely pulverized in an agate mortar. The finely pulverized carbon was placed on a measuring glass plate so as to form a layer having a thickness of about 1 mm. By using a Cu target, the X-ray diffraction spectrum of the finely pulverized carbon was measured. The spacing of (002) lattice planes was calculated from a peak top value determined by a graphic method in which a base line is drawn relative to a characteristic curve appearing on a non-corrected spectrum chart to obtain the peak top value.

The non-aqueous electrolyte secondary cells prepared in the respective Examples and Comparative Examples were subjected to charge/discharge cycles in which a constant-current charging was performed at a charging current of 1 mA until an end voltage of 4.2 V was attained and then a constant-current discharging was performed at a discharging current of 5 mA until an end voltage of 3.0 V was attained. Discharge capacities obtained from the aforementioned charge/discharge cycles were compared with each other. The results are shown in Tables 1A and 1B and Tables 2A and 2B.

**Table 1A**

| | True Specific Gravity of Negative Electrode (g/ml) | Oxidation Treatment Temp. (° C) | Final Treatmen t Temp. (° C) | Spacing of Lattice Plane (Å) | Internal Resistance (Ω) |
|---|---|---|---|---|---|
| Comp. Example 1A | 2.03 | - | - | 3.46 | 20 |
| Comp. Example 2 | 1.45 | 300 | 500 | 3.72 | 18 |
| Comp. Example 3 | 1.55 | 800 | 700 | 3.67 | 15 |
| Comp. Example 4 | 2.26 | - | - | 3.36 | 12 |

**Table 1B**

| | Charging Capacity (mAh) | Discharging Capacity (mAh) | Charge/Discharge Efficiency (%) |
|---|---|---|---|
| Comp. Example 1A | 57 | 28 | 49 |
| Comp. Example 2 | 70 | 35 | 50 |
| Comp. Example 3 | 70 | 30 | 43 |
| Comp. Example 4 | 80 | 35 | 44 |

**Table 2A**

| | True Specific Gravity of Negative Electrode (g/ml) | Oxidation Treatment Temp. (° C) | Final Treatment Temp. (° C) | Spacing of Lattice Plane (Å) | Internal Resistance (Ω) |
|---|---|---|---|---|---|
| Comparative Example 1B | 1.80 | 300 | 1000 | 3.66 | 15 |
| Example 2 | 1.79 | 300 | 950 | 3.67 | 15 |
| Example 3 | 1.70 | 300 | 900 | 3.67 | 16 |
| Example 4 | 1.65 | 300 | 800 | 3.67 | 16 |
| Comparative Example 5 | 1.55 | 300 | 700 | 3.67 | 17 |
| Comparative Example 6 | 1.50 | 300 | 600 | 3.70 | 17 |
| Comparative Example 7 | 1.79 | 200 | 1000 | 3.66 | 15 |
| Comparative Example 8 | 1.79 | 200 | 1000 | 3.66 | 17 |
| Comparative Example A | 1.75 | 400 | 1000 | 3.66 | 14 |
| Comparative Example B | 1.72 | 500 | 1000 | 3.66 | 14 |
| Comparative Example C | 1.70 | 600 | 1000 | 3.60 | 15 |
| Comparative Example D | 1.75 | 700 | 1000 | 3.50 | 14 |
| Comparative Example E | 1.75 | 300 | 1000 | 3.66 | 15 |

**Table 2B**

| | Charging Capacity (mAh) | Discharging Capacity (mAh) | Charge/Discharge Efficiency (%) |
|---|---|---|---|
| Comparative Example 1B | 60 | 42 | 70 |
| Example 2 | 62 | 46 | 74 |
| Example 3 | 65 | 49 | 75 |
| Example 4 | 65 | 48 | 74 |
| Comparative Example 5 | 67 | 48 | 72 |
| Comparative Example 6 | 71 | 49 | 69 |
| Comparative Example 7 | 60 | 42 | 70 |
| Comparative Example 8 | 57 | 40 | 70 |
| Comparative Example A | 60 | 42 | 70 |
| Comparative Example B | 62 | 46 | 74 |
| Comparative Example C | 64 | 47 | 73 |
| Comparative Example D | 65 | 47 | 72 |
| Comparative Example E | 60 | 42 | 70 |

As is apparently understood from the aforementioned Tables, the non-aqueous electrolyte-type secondary cells obtained in Examples according to the present invention are superior in charge/discharge capacities to those obtained in Comparative Examples. It is suggested that this is because the oxidation treatment in air partially weakens a carbon-carbon linkage of the carbonaceous material so that the true specific gravity thereof is caused to be decreased, which results in increasing number of sites capable of trapping or doping lithium in the carbonaceous material.

The carbonaceous material (negative electrode active material) having a narrower spacing of (002) lattice planes, such as the graphite obtained in Comparative Example 4, exhibits a high true specific gravity so that a cell using such a carbonaceous material as a negative electrode is insufficient in charge/discharge efficiency. Further, the negative electrode active material having a spacing of (002) lattice planes of 3.71 Å or larger, such as that obtained in Comparative Example 2, exhibits a too low true specific gravity so that the cell using such a negative electrode active material is inferior in an electrode charging property. On the other hand, the negative electrode active materials obtained above in Examples according to the present invention, exhibits a spacing d of (002) lattice planes ranging from 3.37 to 3.70 Å and a true specific gravity of 1.5 to 1.80 g/ml. This indicates that these active materials has an increased number of sites capable of trapping or doping lithium therein and therefore exhibits a high electrode charging property. As a result, cells using such negative electrode active materials according to the present invention provide a high charge/discharge efficiency. Preferably, the true specific gravity of the negative electrode active material according to the present invention is in the range of 1.55 to 1.79 g/ml.

Meanwhile, as is apparently noted from Comparative Example E, the same effect can be obtained by subjecting the powdery mesophase carbon to the oxidation treatment in air. However, when the powdery mesophase carbon is thermally treated at a temperature lower than that used in the preceding oxidation treatment as in Comparative Example 4, the cell using such a negative electrode active material cannot exhibit a sufficiently high charge/discharge efficiency. In consequence, the thermal treatment in an inert gas atmosphere or in an evacuated condition may be desirably performed at a temperature higher than that employed in the preceding oxidation treatment.

In the above mentioned Examples, only one kind of mesophase carbon is used. However, as is apparently appreciated, the same effect as above can be obtained by using the other kind of mesophase carbon.

In addition, although air oxidation is used for the oxidation treatment of the carbonaceous material in the aforementioned Examples, the same effect can be apparently obtained by the other types of oxidation treatment such as an inorganic or organic acid-oxidation treatment, an ozone-oxidation treatment, an oxidizing agent-oxidation treatment in which an oxidizing agent such as potassium manganate or aluminum chloride is used, or the like.

LiₓMO₂ (where M represents at least one transition metal) can be suitably used as the positive electrode active material. However, any other positive electrode active material can be used in the present invention.

In the aforementioned Examples, the cell of a coin shape is used. However, it was confirmed that the same effect can be obtained even in the case where the cell of a rectangular shape is used. Accordingly, the present invention can be extremely useful for production of various cells such as a laminate-type rectangular cell, a laminate-type card-shaped cell, or the like. Moreover, the sintered carbon body may be finely pulverized and blended with a binder to prepare a raw mixture for a positive electrode. Such a raw mixture can be layered over a band-like current collector to produce a cylindrical cell.

Next, a total expansion coefficient (volume expansion coefficient) of the mesophase carbon which is used as a carbon precursor, is described in detail below by way of Experimental Examples.

### Experimental Example P-1 :

A mesophase carbon containing 85.5 % of a fixed carbon and having a total expansion coefficient of 62 % (measured by a dilatometer used in a thermal expansion test for coal) was shaped under a pressure of 3 tons into a compressed body having a diameter of 16.5 mm. The compressed body was sintered at 1,000° C for 3 hours so that a sintered carbonaceous material was obtained. However, the sintered carbonaceous material was in an amorphous state and therefore it was impossible to apply the sintered carbonaceous material to the production of cell. It was confirmed that the true specific gravity of the sintered carbonaceous material was 1.90 g/cm³.

### Experimental Example P-2:

A mesophase carbon containing 85.5 % of a fixed carbon and having a total expansion coefficient of 30 % (measured by a dilatometer used in a thermal expansion test for coal) was shaped under a pressure of 3 tons into a compressed body having a diameter of 16.5 mm. The compressed body was sintered at 1,000° C for 3 hours so that a sintered carbonaceous material was obtained. However, the sintered carbonaceous material was in an amorphous state and therefore it was impossible to apply the sintered carbonaceous material to the production of cell. It was confirmed that the true specific gravity of the sintered carbonaceous material was 1.90 g/cm³.

### Experimental Example P-3:

A mesophase carbon containing 85.5 % of a fixed carbon and having a total expansion coefficient of 20 % (measured by a dilatometer used in a thermal expansion test for coal) was shaped under a pressure of 3 tons into a compressed body having a diameter of 16.5 mm. The compressed body was sintered at 1,000° C for 3 hours so that a sintered carbon body having a diameter of 16.0 mm was obtained. It was confirmed that the true specific gravity of the sintered carbon body was 1.80 g/cm³.

### Experimental Example P-4:

A mesophase carbon containing 88.5 % of a fixed carbon and having a total expansion coefficient of 0 % (measured by a dilatometer used in a thermal expansion test for coal) was shaped under a pressure of 3 tons into a compressed body having a diameter of 16.5 mm. The compressed body was sintered at 1,000° C for 3 hours so that a sintered carbon body having a diameter of 16.0 mm was obtained. It was confirmed that the true specific gravity of the sintered carbon body was 1.79 g/cm³.

The results of the aforementioned Experimental Examples P-1 to P-4 are shown in Table 3.

**Table 3**

| | True Specific Gravitf Negative Electrode (g/ml) | Total Expansion Coefficient | Production of Sintered Body |
|---|---|---|---|
| Experimental Example P-1 | 1.90 | 62 | not attainable |
| Experimental Example P-2 | 1.90 | 30 | not attainable |
| Experimental Example P-3 | 1.80 | 20 | attainable |
| Experimental Example P-4 | 1.79 | 0 | attainable |

As is apparently understood from Table 3, in case that the total expansion coefficient was as high as 30 % or greater, it was impossible to produce a sintered body from the carbonaceous material. Accordingly, the sintered carbon body can be suitably produced when the carbonaceous material having a total expansion coefficient of 20 % or lower, preferably 10 % or lower is used. However, in the event that the sintered carbon is finely pulverized and then blended with a binder to prepare a raw mixture for electrodes, the total expansion coefficient thereof is not restricted to the particular range. In this case, a carbonaceous material having a larger total expansion coefficient can be used to produce a negative electrode of a non-aqueous electrolyte-type secondary cell.

## Claims

1. A method of producing a negative electrode carbonaceous material, in which a mesophase carbon is used as a carbon precursor, comprising the successive steps of:
subjecting said mesophase carbon to an oxidation treatment; said oxidation treatment being performed by air-oxidation, inorganic or organic acid-oxidation, ozone-oxidation or oxidizing agent-oxidation in which an oxidizing agent such as potassium manganate or aluminum chloride is used; and
thermally treating said mesophase carbon at a temperature higher than that of said oxidation treatment in an inert gas atmosphere or in an evacuated condition, to thereby obtain a carbonaceous material having a true specific gravity of 1.50 to 1.80 g/ml, wherein
said thermal treatment is carried out at a temperature of 800° C or higher and lower than 1000° C, while said oxidation treatment is carried out at a temperature lower by 100° C or more than that in the thermal treatment.

2. The method as claimed in claim 1, wherein said mesophase carbon has a volume expansion coefficient of 20 % or lower.

3. The method as claimed in claim 1 or 2, wherein the oxidation treatment of said mesophase carbon is carried out in an oxidation atmosphere.

4. A non-aqueous electrolyte-type secondary cell comprising as negative electrode active material a carbonaceous material obtained by the method of claim 1 or 2.

5. The non-aqueous electrolyte-type secondary cell as claimed in claim 4, further comprising a positive electrode active material composed of a composite oxide represented by LiₓMO₂ where M is at least one transition metal and X is a number not less than 0.05 but not greater than 1.10.

## Patentansprüche

1. Verfahren zum Herstellen eines kohlenstoffhaltigen Materials für eine Negativelektrode, bei dem Kohlenstoff in einer Mesophase als Kohlenstoff-Vorläufer verwendet wird, mit den folgenden aufeinanderfolgenden Schritten:
- der Kohlenstoff in einer Mesophase wird einer Oxidationsbehandlung unterzogen, die durch Oxidation durch Luft, durch Oxidation mit einer anorganischen oder organischen Säure, durch Ozonoxidation oder Oxidation durch ein Oxidationsmittel ausgeführt wird, wobei ein Oxidationsmittel wie Kaliummanganat oder Aluminiumchlorid verwendet wird; und
- der Kohlenstoff in einer Mesophase wird bei einer Temperatur über derjenigen der Oxidationsbehandlung in einer Inertgasatmosphäre oder unter Vakuumbedingungen thermisch behandelt, um dadurch ein kohlenstoffhaltiges Material mit einer wahren spezifischen Dichte von 1,50 bis 1,80 g/ml zu erhalten;
- wobei die Wärmebehandlung bei einer Temperatur von 800°C oder höher und unter 1000°C ausgeführt wird, während die Oxidationsbehandlung bei einer Temperatur ausgeführt wird, die um 100°C oder mehr unter der bei der thermischen Behandlung liegt.

2. Verfahren nach Anspruch 1, bei dem der Kohlenstoff in einer Mesophase einen Volumenexpansionskoeffizienten von 20% oder weniger aufweist.

3. Verfahren nach Anspruch 1 oder 2, bei dem die Oxidationsbehandlung des Kohlenstoffs in einer Mesophase in einer oxidierenden Atmosphäre ausgeführt wird.

4. Sekundärzelle mit nichtwässrigem Elektrolyten, die als aktives Material der Negativelektrode ein kohlenstoffhaltiges Material enthält, das durch das Verfahren nach Anspruch 1 oder 2 erhalten wurde.

5. Sekundärzelle mit nichtwässrigem Elektrolyten nach Anspruch 4, ferner mit einem aktiven Material der Positivelektrode, das aus einem durch Li_{X}MO₂ repräsentierten Mischoxid besteht, wobei M mindestens ein Übergangsmetall ist und X eine Zahl nicht kleiner als 0,05 und nicht größer 1,10 ist.

## Revendications

1. Procédé pour la production d'une matière carbonée d'électrode négative, dans lequel un carbone de mésophase est utilisé comme précurseur de carbone, comprenant les étapes successives consistant :
à soumettre ledit carbone de mésophase à un traitement d'oxydation ; ledit traitement d'oxydation étant réalisé par une oxydation à l'air, une oxydation par un acide inorganique ou organique, une oxydation à l'ozone ou une oxydation par un agent oxydant, dans lequel est utilisé un agent oxydant, tel que du manganate de potassium ou du chlorure d'aluminium ; et
à traiter thermiquement ledit carbone de mésophase à une température supérieure à celle dudit traitement d'oxydation dans une atmosphère de gaz inerte ou dans des conditions de vide, pour obtenir par là une matière carbonée présentant une densité spécifique vraie de 1,50 à 1,80 g/ml, dans lequel
ledit traitement thermique est réalisé à une température de 800°C ou supérieure et inférieure à 1000°C, alors que ledit traitement d'oxydation est réalisé à une température inférieure de 100°C ou plus à celle du traitement thermique.

2. Procédé selon la revendication 1, dans lequel ledit carbone de mésophase présente un coefficient de dilatation volumique de 20 % ou inférieur.

3. Procédé selon la revendication 1 ou 2, dans lequel le traitement d'oxydation dudit carbone de mésophase est réalisé dans une atmosphère d'oxydation.

4. Accumulateur secondaire de type à électrolyte non aqueux comprenant comme matière active d'électrode négative une matière carbonée obtenue par le procédé selon la revendication 1 ou 2.

5. Accumulateur secondaire de type à électrolyte non aqueux selon la revendication 4 comprenant en outre une matière active d'électrode positive constituée d'un oxyde composite représenté par LiₓMO₂ où M est au moins un métal de transition et X est un nombre d'au moins 0,05 mais d'au plus 1,10.
